(19) Europäisches Patentamt
European Patent Office
Office européen des brevets

(11) **EP 4 546 447 A1**

(12) **EUROPEAN PATENT APPLICATION**
published in accordance with Art. 153(4) EPC

(43) Date of publication:
**30.04.2025 Bulletin 2025/18**

(21) Application number: **23912862.2**

(22) Date of filing: **26.12.2023**

(51) International Patent Classification (IPC):
*H01M 4/134* (2010.01)    *H01M 4/38* (2006.01)
*H01M 4/48* (2010.01)    *H01M 10/0525* (2010.01)
*H01M 4/04* (2006.01)    *H01M 4/02* (2006.01)

(52) Cooperative Patent Classification (CPC):
**H01M 4/02; H01M 4/04; H01M 4/134; H01M 4/38;
H01M 4/48; H01M 10/0525;** Y02E 60/10

(86) International application number:
**PCT/KR2023/021551**

(87) International publication number:
**WO 2024/144187 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 KR 20220184204**

(71) Applicant: **LG Energy Solution, Ltd.
Seoul 07335 (KR)**

(72) Inventors:
• **JUN, Chan Soo
Daejeon 34122 (KR)**

• **KWON, Yohan
Daejeon 34122 (KR)**
• **MIN, Jiwon
Daejeon 34122 (KR)**
• **PARK, Su Jin
Daejeon 34122 (KR)**
• **LEE, Jaewook
Daejeon 34122 (KR)**

(74) Representative: **Hoffmann Eitle
Patent- und Rechtsanwälte PartmbB
Arabellastraße 30
81925 München (DE)**

(54) **ANODE FOR LITHIUM SECONDARY BATTERY, METHOD FOR MANUFACTURING ANODE FOR LITHIUM SECONDARY BATTERY, AND LITHIUM SECONDARY BATTERY COMPRISING ANODE**

(57)    The present application relates to a negative electrode for a lithium secondary battery, a method for manufacturing a negative electrode for a lithium secondary battery, and a lithium secondary battery including a negative electrode.

[Figure 1]

**Description**

[Technical Field]

The present application claims priority to and the benefit of Korean Patent Application No. 10-2022-0184204 filed in the Korean Intellectual Property Office on December 26, 2022, the entire contents of which are incorporated herein by reference.

The present application relates to a negative electrode for a lithium secondary battery, a method for manufacturing a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In particular, in response to the demand for high-density energy batteries in recent years, researches are being actively conducted on a method for increasing a capacity by using a silicon-based compound such as Si/C or $SiO_x$ having a capacity 10-fold or higher than that of a graphite-based material, in combination as a negative electrode active material. When compared with graphite that is typically used, however, the silicon-based compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that degradation in surface is accelerated, and therefore, the performance needs to be improved in terms of battery cycle.

Therefore, in order to solve the problem that occurs when a silicon-based compound is used as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.

However, since the above methods may make the performance of the battery rather deteriorate, there is a limitation in application, so that there is still a limitation in commercialization of manufacturing a negative electrode battery having a high content of a silicon-based compound. In addition, as the proportion of the silicon-based active material included in the silicon-based active material layer increases, pre-lithiation is concentrated on the surface of the negative electrode, so that the silicon-based active material on the surface is rather damaged, and as non-uniform pre-lithiation occurs, a problem with the improvement of life characteristics occurs.

In addition, the silicon-based negative electrode undergoes one charge and discharge during an activation process, and at this time, the charging cannot proceed at a high rate due to the influence of the highly reactive silicon-based active material, which increases the time of the activation process and causes problems in the manufacturing process.

Therefore, there is a need for research on a negative electrode that does not cause a decrease in capacity characteristics even when a silicon-based compound is used as an active material in order to improve capacity characteristics, can improve cycle performance by preventing deterioration in the electrode surface during charging and discharging cycles, can shorten a process time during an activation process, and has an optimal arrangement of silicon phases according to the activation process.

Prior Art Document

(Patent Literature 1) Japanese Patent Application Publication No. 2009-080971

[Detailed Description of the Invention]

[Technical Problem]

The present application relates to a negative electrode for a lithium secondary battery, a method for manufacturing a negative electrode for a lithium secondary battery, and a lithium secondary battery including a negative electrode, capable of while using a silicon-based active material for a negative electrode, maximizing capacity characteristics, which is a main purpose of using the silicon-based active material, preventing deterioration in electrode surface during charging and discharging cycles, which is a problem in the related art, and achieving an optimal arrangement of silicon phases in a negative electrode active material layer through a high-rate activation process.

That is, the negative electrode for a lithium secondary battery according to the present application has a main feature of defining states of silicon phases in a negative electrode for a lithium secondary battery, which can exhibit a capacity retention rate and a resistance characteristic equal to or higher than those of a negative electrode for which a process time is increased by applying a low-rate activation process, and secure processability.

[Technical Solution]

An exemplary embodiment of the present specification provides a negative electrode for a lithium secondary battery, the negative electrode including: a negative electrode current collector layer; and a negative electrode active material layer provided on one surface or both surfaces of the negative electrode current collector layer, wherein the negative electrode active material layer includes a first negative electrode active material layer provided on the negative electrode current collector layer and a second negative electrode active material layer provided on a surface of the first negative electrode active material layer opposite to a surface facing the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the first negative electrode active material includes one or more selected from the group consisting of $SiO_x$ (x=0) and $SiO_x$ (0<x<2), and includes $SiO_x$ (x=0) in an amount of 95 parts by weight or more based on 100 parts by weight of the first negative electrode active material, wherein the second negative electrode active material includes a mixture of one or more selected from the group consisting of a carbon-based active material, a silicon-based active material, a metal-based active material capable of alloying with lithium, and a lithium-containing nitride, wherein a ratio of silicon in an amorphous phase included in the first negative electrode active material layer is lower than a ratio of silicon in an amorphous phase included in the second negative electrode active material layer, and wherein a ratio of silicon phases included in the negative electrode active material layer satisfies following Formula 1:

$$[Formula\ 1]$$

$$5 \leq B/(A+B) \times 100(\%) \leq 30$$

in Formula 1, A refers to a part by weight of a crystalline phase based on 100 parts by weight of the silicon phases included in the negative electrode active material layer, and B refers to a part by weight of an amorphous phase based on 100 parts by weight of the silicon phases included in the negative electrode active material layer.

Another exemplary embodiment provides a lithium secondary battery including: a positive electrode; the negative electrode for a lithium secondary battery according to the present application; a separator provided between the positive electrode and the negative electrode; and an electrolyte.

Furthermore, there is provided a method for manufacturing a lithium secondary battery, the method including: preparing a lithium secondary battery including a positive electrode, a negative electrode for a lithium secondary battery, a separator, and an electrolyte; and activating the lithium secondary battery, wherein the activating includes a high-C-rate activation process (high-rate charging), wherein the preparing the negative electrode for a lithium secondary battery includes preparing a negative electrode current collector layer, forming a first negative electrode active material layer by applying a first negative electrode active material layer composition to one surface or both surfaces of the negative electrode current collector layer using a coater, and forming a second negative electrode active material layer by applying a second negative electrode active material layer composition to a surface of the first negative electrode active material layer opposite to a surface in contact with the negative electrode current collector layer using a coater, wherein the first negative electrode active material includes one or more selected from the group consisting of SiOx (x=0) and SiOx (0<x<2), and includes SiOx (x=0) in an amount of 95 parts by weight or more based on 100 parts by weight of the first negative electrode active material, and wherein the second negative electrode active material includes a mixture of one or more selected from the group consisting of a carbon-based active material, a silicon-based active material, a metal-based active material capable of alloying with lithium, and a lithium-containing nitride.

[Advantageous Effects]

The negative when electrode for a lithium secondary battery according to an exemplary embodiment of the present invention has a double-layered active material layer composed of the first negative electrode active material layer and the second negative electrode active material layer. In particular, the first negative electrode active material included in the first negative electrode active material layer includes one or more selected from the group consisting of SiOx (x=0) and SiOx (0<x<2), and includes SiOx (x=0) in an amount of 95 parts by weight or more on the basis of 100 parts by weight of the first negative electrode active material, and the second negative electrode active material included in the second negative electrode active material layer includes a mixture of one or more selected from the group consisting of a carbon-based active material, a silicon-based active material, a metal-based active material capable of alloying with lithium, and a lithium-containing nitride.

The negative electrode for a lithium secondary battery according to the present application includes a double-layer active material layer having a specific composition and content as described above. In particular, the first negative electrode active material layer includes a high content of SiOx (x=0), so that the advantages of high capacity, high density, and rapid charging can be retained as they are. Furthermore, silicon-based and/or carbon-based active materials, and the like are included in the second negative electrode active material layer, so that degradation in the electrode surface can be prevented during charging and discharging cycles, and uniformity can also be improved during pre-lithiation.

Among them, in particular, the negative electrode for a lithium secondary battery according to the present application can enable high-C-rate charging during the activation process, and thus achieves an optimal arrangement of silicon phases in the negative electrode active material layer to satisfy the range of Formula 1 above.

Accordingly, a lithium secondary battery including the negative electrode satisfies optimal capacity characteristics, which are the advantage of a Si negative electrode, and at the same time, satisfies cycle characteristics.

As a result, the negative electrode for a lithium secondary battery according to the present application has the second negative electrode active material layer coated on top of the first negative electrode active material layer and at the same time, achieves an optimal arrangement of silicon phases in the negative electrode active material layer (particularly, arrangement of silicon phases in the first negative electrode active material layer) to satisfy the range of Formula 1 above through condition adjustment of the activation process, in order to take an advantage of an electrode in which a high content of Si particles is applied as a single-layer active material, and to solve the disadvantages that are caused when the high content of Si particles is applied, such as problems of surface degradation, uniformity during pre-lithiation, and life characteristics.

[Brief Description of Drawings]

FIG. 1 is a view showing a stack structure of a negative electrode for a lithium secondary battery according to an exemplary embodiment of the present application.
FIG. 2 is a view showing a stack structure of a negative electrode for a lithium secondary battery according to an exemplary embodiment of the present application.
FIG. 3 is a flowchart showing a wet-on-dry process according to an exemplary embodiment of the present application.
FIG. 4 is a flowchart showing a wet-on-wet process according to an exemplary embodiment of the present application.
FIG. 5 is a view showing distributions of silicon phases through Raman analysis for negative electrodes (first negative electrode active material layers) for a lithium secondary battery according to Examples 1 to 4 of the present application.
FIG. 6 is a view showing distributions of silicon phases through Raman analysis for negative electrodes (first negative electrode active material layers) for a lithium secondary battery according to Comparative Examples 1 to 4 of the present application.
FIG. 7 is a SEM photograph of a cross section of a negative electrode for a lithium secondary battery according to Comparative Example 5 of the present application.

<Explanation of Reference Numerals and Symbols>

**[0025]**

　　　10: second negative electrode active material layer
　　　20: first negative electrode active material layer
　　　30: negative electrode current collector layer

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle diameter measurement apparatus (for example, Microtrac S3500) in which a difference in a diffraction pattern according to the particle size is measured, when a laser beam passes through particles, and then a particle diameter distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode for a lithium secondary battery, the negative electrode including: a negative electrode current collector layer; and a negative electrode active material layer provided on one surface or both surfaces of the negative electrode current collector layer, wherein the negative electrode active material layer includes a first negative electrode active material layer provided on the negative electrode current collector layer and a second negative electrode active material layer provided on a surface of the first negative electrode active material layer opposite to a surface facing the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the first negative electrode active material includes one or more selected from the group consisting of SiOx (x=0) and SiOx (0<x<2), and includes SiOx (x=0) in an amount of 95 parts by weight or more based on 100 parts by weight of the first negative electrode active material, wherein the second negative electrode active material includes a mixture of one or more selected from the group consisting of a carbon-based active material, a silicon-based active material, a metal-based active material capable of alloying with lithium, and a lithium-containing nitride, wherein a ratio of silicon of an amorphous phase included in the first negative electrode active material layer is lower than a ratio of silicon of an amorphous phase included in the second negative electrode active material layer, and wherein a ratio of silicon phases included in the negative electrode active material layer satisfies following Formula 1:

$$[\text{Formula 1}]$$

$$5 \leq B/(A+B) \times 100(\%) \leq 30$$

in Formula 1, A refers to a part by weight of a crystalline phase based on 100 parts by weight of the silicon phases included in the negative electrode active material layer, and B refers to a part by weight of an amorphous phase based on 100 parts by weight of the silicon phases included in the negative electrode active material layer.

The negative electrode for a lithium secondary battery according to the present application has the second negative electrode active material layer coated on top of the first negative electrode active material layer and at the same time, achieves an optimal arrangement of silicon phases in the negative electrode active material layer to satisfy the range of Formula 1 above through condition adjustment of the activation process, in order to take an advantage of an electrode in which a high content of Si particles is applied as a single-layer active material, and to solve the disadvantages that are caused when the high content of Si particles is applied, such as problems of surface degradation, uniformity during pre-lithiation, and life characteristics.

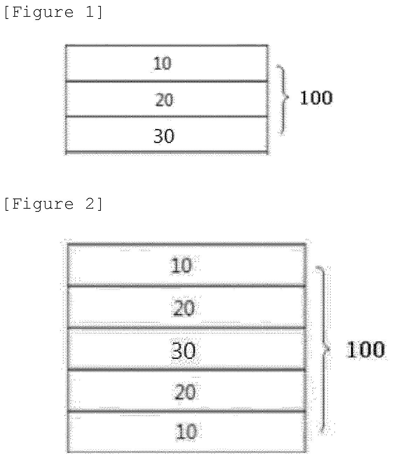

FIG. 1 is a view showing a stack structure of a negative electrode for a lithium secondary battery according to an exemplary embodiment of the present application. Specifically, a negative electrode 100 for a lithium secondary battery can be seen which includes a first negative electrode active material layer 20 and a second negative electrode active material layer 10 on one surface of a negative electrode current collector layer 30. FIG. 1 shows that the first negative electrode active material layer is formed on one surface, but the first negative electrode active material layer may be formed on both surfaces of the negative electrode current collector layer. As described above, in an exemplary embodiment of the present application, the first negative electrode active material layer may be formed on an entire surface of the negative electrode current collector layer, and the second negative electrode active material layer may be formed on an entire surface of the first negative electrode active material layer.

In addition, FIG. 2 is a view showing a stack structure of a negative electrode for a lithium secondary battery according to an exemplary embodiment of the present application. Specifically, as shown in FIG. 2, a first negative electrode active material layer 20 and a second negative electrode active material layer 10 may be formed on both surfaces of a negative electrode current collector layer 30. In addition, an arrangement of 10>20>30>20>10 is possible, and furthermore, when the first negative electrode active material layer and the second negative electrode active material layer are sequentially stacked on only one surface of the negative electrode current collector layer, such as 10>20>30>20, 10>20>30>10, 10>20>30>10>20, or the like, the negative electrode active material layers may be stacked in an arbitrary arrangement on the opposite surface. Preferably, both surfaces of the negative electrode current collector layer have the same composition, and specifically may have a structure of 10>20>30>20>10.

Below, the negative electrode for a lithium secondary battery of the present invention will be described in more detail.

In an exemplary embodiment of the present application, there is provided a negative electrode for a lithium secondary battery including a negative electrode current collector layer and a negative electrode active material layer provided on one surface or both surfaces of the negative electrode current collector layer, wherein the negative electrode active material layer includes a first negative electrode active material layer provided on the negative electrode current collector layer and a second negative electrode active material layer provided on a surface of the first negative electrode active material layer opposite to a surface facing the negative electrode current collector layer.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 $\mu$m or greater and 100 $\mu$m or less.

However, the thickness may be variously modified depending on a type and a use of negative electrode used, and is not limited thereto.

In an exemplary embodiment of the present application, the first negative electrode active material may include one or more selected from the group consisting of SiOx (x=0) and SiOx (0<x<2), and may include the SiOx (x=0) in an amount of 95 parts by weight or more on the basis of 100 parts by weight of the first negative electrode active material.

In an exemplary embodiment of the present application, the first negative electrode active material may include one or more selected from the group consisting of SiOx (x=0) and SiOx (0<x<2), and may include SiOx (x=0) in an amount of 95 parts by weight or more, preferably 97 parts by weight or more, and more preferably 99 parts by weight or more, and 100 parts by weight or less, on the basis of 100 parts by weight of the first negative electrode active material.

In an exemplary embodiment of the present application, pure silicon (Si) particles may be particularly used as the first negative electrode active material. The use of pure silicon (Si) as the first negative electrode active material may mean that, on the basis of total 100 parts by weight of the first negative electrode active material as described above, pure Si particles (SiOx (x=0)) not bound to other particles or elements are included within the above range.

In an exemplary embodiment of the present application, the first negative electrode active material may be composed of SiOx (x=0).

The first negative electrode active material layer according to the present application includes the first negative electrode active material, and specifically, includes pure silicon particles including 95 parts by weight or more of SiOx (x=0). When a high content of pure silicon particles is included, the capacity characteristics are excellent, but the life characteristics are degraded due to a non-uniform reaction on a surface. Accordingly, the second negative electrode active material layer according to the present invention is included at a specific weight loading amount, thereby solving the above-described problems.

Note that an average particle diameter (D50) of the first negative electrode active material of the present invention may be 3 μm to 10 μm, specifically 4 μm to 8 μm, and more specifically 5 μm to 7 μm. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. Note that, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the first negative electrode active material generally has a characteristic BET specific surface area. The BET specific surface area of the first negative electrode active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET specific surface area is measured in accordance with DIN 66131 (using nitrogen).

In an exemplary embodiment of the present application, the first negative electrode active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present application, the first negative electrode active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Formula A-1, in which A is an area and P is a boundary line.

[Formula A-1]

$$4\pi A/P^2$$

In an exemplary embodiment of the present application, there is provided the negative electrode for a lithium secondary battery in which the first negative electrode active material is included in an amount of 60 parts by weight or more on the basis of 100 parts by weight of the first negative electrode active material layer composition.

In another exemplary embodiment, the first negative electrode active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the first negative electrode active material layer composition.

Although the first negative electrode active material layer composition according to the present application uses the first negative electrode active material with a significantly high capacity within the above range, the first negative electrode active material layer composition also uses a second negative electrode active material layer described below, thereby solving the problems of surface degradation during charging and discharging, uniformity during pre-lithiation, and life characteristics without lowering the overall capacity performance of the negative electrode.

In the related art, it is general to use only graphite-based compounds as the negative electrode active material.

However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present application, the first negative electrode active material layer composition may further include one or more selected from the group consisting of a first negative electrode conductive material, and a first negative electrode binder.

In this case, as the first negative electrode conductive material and the first negative electrode binder included in the first negative electrode active material layer composition, those used in the art may be used without limitation.

In an exemplary embodiment of the present application, as the first negative electrode conductive material, materials that can be generally used in the art may be used without limitation, and specifically, one or more selected from the group consisting of a point-like conductive material, a planar conductive material; and a linear conductive material may be included.

In an exemplary embodiment of the present application, the point-like conductive material refers to a conductive material that may be used for improving conductivity of the negative electrode, has conductivity without causing a chemical change and has a point-like or spherical shape. Specifically, the point-like conductive material may be one or more selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less. In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the first negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 1.5 $\mu$m or less, D50 of 2.5 $\mu$m or greater and 3.5 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2/g$ or greater.

In another exemplary embodiment, the planar conductive material may have a BET specific surface area of 5 $m^2/g$ or greater and 500 $m^2/g$ or less, preferably 5 $m^2/g$ or greater and 300 $m^2/g$ or less, and more preferably 5 $m^2/g$ or greater and 250 $m^2/g$ or less.

In another exemplary embodiment, the planar conductive material is a planar conductive material with a high specific surface area, and the BET specific surface area may satisfy a range of 50 $m^2/g$ or greater and 500 $m^2/g$ or less, preferably 80 $m^2/g$ or greater and 300 $m^2/g$ or less, and more preferably 100 $m^2/g$ or greater and 300 $m^2/g$ or less.

In another exemplary embodiment, the planar conductive material is a planar conductive material with a low specific surface area, and the BET specific surface area may satisfy a range of 5 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the first negative electrode conductive material may satisfy a range of 10 part by weight or more and 40 parts by weight or less, on the basis of 100 parts by weight of the first negative electrode active material layer composition.

In another exemplary embodiment, the first negative electrode conductive material may be included in an amount of 1 part by weight or more and 40 parts by weight or less, preferably 3 parts by weight or more and 30 parts by weight or less, and more preferably 5 parts by weight or more and 25 parts by weight or less on the basis of 100 parts by weight of the first negative electrode active material layer composition.

In an exemplary embodiment of the present application, the first negative electrode conductive material may include a point-like conductive material, a planar conductive material, and a linear conductive material, and a ratio of the point-like conductive material: the planar conductive material: the linear conductive material may satisfy 1:1:0.01 to 1:1:1.

In an exemplary embodiment of the present application, the point-like conductive material may satisfy a range of 1 part by weight or more and 60 parts by weight or less, preferably 5 parts by weight or more and 50 parts by weight or less, and more preferably 10 parts by weight or more and 50 parts by weight or less on the basis of 100 parts by weight of the first negative electrode conductive material.

In an exemplary embodiment of the present application, the planar conductive material may satisfy a range of 1 part by weight or more and 60 parts by weight or less, preferably 5 parts by weight or more and 50 parts by weight or less, and more preferably 10 parts by weight or more and 50 parts by weight or less on the basis of 100 parts by weight of the first negative electrode conductive material.

In an exemplary embodiment of the present application, the linear conductive material may satisfy a range of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the first negative electrode conductive material.

In an exemplary embodiment of the present application, the first negative electrode conductive material may include a linear conductive material, and a planar conductive material.

In an exemplary embodiment of the present application, the first negative electrode conductive material may include a linear conductive material and a planar conductive material, and a weight ratio of the linear conductive material to the planar conductive material may satisfy 0.01:1 to 0.1:1.

In an exemplary embodiment of the present application, as the first negative electrode conductive material satisfies the composition and ratio described above, the first negative electrode conductive material has a feature in which output characteristics at a high C-rate are excellent because the life characteristics of the existing lithium secondary battery are not greatly affected and points where the battery can be charged and discharged are increased.

The first negative electrode conductive material according to the present application has a completely different configuration from a conductive material that is applied to the positive electrode. That is, the first negative electrode conductive material according to the present application serves to hold contacts between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the first negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the first negative electrode conductive material that is applied together with the silicon-based active material as in the present invention, in terms of configuration and role.

In an exemplary embodiment of the present application, the first negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The first negative electrode binder according to an exemplary embodiment of the present application serves to hold the first negative electrode active material and the first negative electrode conductive material in order to prevent distortion and structural deformation of the negative electrode structure in volume expansion and relaxation of the first negative electrode active material. When such roles are satisfied, all of the general binders can be applied. Specifically, an aqueous binder may be used, and more specifically, a PAM-based binder may be used.

In an exemplary embodiment of the present application, the first negative electrode binder may be included in an amount of 30 parts by weight or less, preferably 25 parts by weight or less, and more preferably 20 parts by weight or less, and 5 parts by weight or more and 10 parts by weight or more on the basis of 100 parts by weight of the first negative electrode active material layer composition.

Compared to existing carbon-based negative electrodes, when a Si-based negative electrode is used, an aqueous binder is applied in parts by weight described above, allowing the use of a point-like conductive material. In addition, the above characteristics allows the point-like conductive material to have hydrophobicity and excellent bond strength between the conductive material and the binder.

In an exemplary embodiment of the present application, wherein the second negative electrode active material may include a mixture of one or more selected from the group consisting of a carbon-based active material, a silicon-based active material, a metal-based active material capable of alloying with lithium, and a lithium-containing nitride.

In another exemplary embodiment, the second negative electrode active material may include a mixture of one or more and three or less selected from the group consisting of a carbon-based active material, a silicon-based active material, a metal-based active material capable of alloying with lithium, and a lithium-containing nitride.

In another exemplary embodiment, the second negative electrode active material may include a carbon-based active material and a silicon-based active material.

In another exemplary embodiment, the second negative electrode active material may include a silicon-based active material.

In an exemplary embodiment of the present application, there is provided the negative electrode for a lithium secondary battery in which the second negative electrode active material includes a mixture of one or more selected from the group consisting of a carbon-based active material, a silicon-based active material, a metal-based active material capable of alloying with lithium, and a lithium-containing nitride, and the silicon-based active material is included in an amount of 50 parts by weight or more and 100 parts by weight or less on the basis of 100 parts by weight of the second negative electrode active material.

In another exemplary embodiment, the second negative electrode active material may include a mixture of one or more selected from the group consisting of a carbon-based active material, a silicon-based active material, a metal-based active material capable of alloying with lithium, and a lithium-containing nitride.

In an exemplary embodiment of the present application, the silicon-based active material included in the second negative electrode active material may include one or more selected from the group consisting of $SiO_x$ ($0<x<2$), SiC, and a Si alloy.

In an exemplary embodiment of the present application, the silicon-based active material included in the second negative electrode active material may include one or more selected from the group consisting of $SiO_x$ ($0<x<2$), SiC, and a Si alloy, and may include $SiO_x$ ($0<x<2$) in an amount of 1 part by weight or more on the basis of 100 parts by weight of the second negative electrode active material.

In another exemplary embodiment, the silicon-based active material included in the second negative electrode active material may include one or more selected from the group consisting of $SiO_x$ ($0<x<2$), SiC, and a Si alloy, and may include $SiO_x$ ($0<x<2$) in an amount of 1 part by weight or more, or 10 parts by weight or more, and 99 parts by weight or less on the basis of 100 parts by weight of the second negative electrode active material.

In another exemplary embodiment, the silicon-based active material included in the second negative electrode active material may include $SiO_x$ ($0<x<2$).

In another exemplary embodiment, the silicon-based active material included in the second negative electrode active material may include SiC.

The negative electrode for a lithium secondary battery according to the present application includes the second negative electrode active material in the second negative electrode active material layer as described above. Accordingly, while maintaining the high capacity and high density characteristics by including the above-described first negative electrode active material, the second negative electrode active material serves as a buffer layer, making it possible to address the problem of degradation in surface during charging and discharging, the problem of uniformity during pre-lithiation, and the problem of life characteristics.

As an example, the second negative electrode active material layer of the present application may act as a buffer layer. An electrode containing a Si active material has excellent capacity characteristics compared to electrodes containing SiO or carbon-based active material. However, in the electrode containing a Si active material, deterioration is concentrated on the surface of the negative electrode active material layer due to rapid reaction with Li ions during charging and discharging. This also occurs during the pre-lithiation process in which lithium ions are included in advance in the negative electrode active material layer. In the pre-lithiation process, a buffer layer is used to prevent direct contact between a Si-based electrode and lithium and to prevent deterioration in surface. Therefore, the second negative electrode active material layer of the present invention has the feature of being able to exhibit the same role and effect as the buffer layer in the pre-lithiation process.

In an exemplary embodiment of the present application, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a spherical or point-like shape and used.

In an exemplary embodiment of the present application, the planar conductive material that is used as the first negative electrode conductive material described above has different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the first negative electrode conductive material is a material having a plane or plate-like shape, and may be expressed as plate-like graphite. That is, the planar conductive material is a material that is included so as to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

A representative example of the metal-based active material may be a compound containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal compounds may be used in any form such as a single body, an alloy, an oxide ($TiO_2$, $SnO_2$ and the like), a nitride, a sulfide, a boride, and an alloy with lithium, but the single body, the alloy, the oxide, and the alloy with lithium may be increased in capacity.

In an exemplary embodiment of the present application, there is provided the negative electrode for a lithium secondary battery in which the second negative electrode active material is included in an amount of 60 parts by weight or more on the basis of 100 parts by weight of the second negative electrode active material layer composition.

In another exemplary embodiment, the second negative electrode active material may satisfy a range of 60 parts by weight or more and 100 parts by weight or less, or 99 parts by weight or less based on 100 parts by weight of the second negative electrode active material layer composition.

The second negative electrode active material layer composition according to the present application has a feature of suppressing a surface reaction of the negative electrode to enhance life characteristics without degrading the capacity performance of the negative electrode by using the second negative electrode active material within the above range, which has lower capacity characteristics but has less particle cracking during charging and discharging than the first negative electrode active material.

In an exemplary embodiment of the present application, there is provided the negative electrode for a lithium secondary battery in which the second negative electrode active material layer composition further includes one or more selected from the group consisting of a second negative electrode conductive material and a second negative electrode binder.

In this case, the descriptions regarding the second negative electrode conductive material and the second negative electrode binder may be the same as the above descriptions regarding the first negative electrode conductive material and the first negative electrode binder.

In an exemplary embodiment of the present application, there is provided the negative electrode for a lithium secondary battery in which a ratio of silicon in an amorphous phase included in the first negative electrode active material layer is lower than a ratio of silicon in an amorphous phase included in the second negative electrode active material layer, and in which a ratio of silicon phases included in the negative electrode active material layer satisfies following Formula 1:

$$[\text{Formula 1}]$$

$$5 \leq B/(A+B) \times 100(\%) \leq 30$$

in Formula 1 above,

A refers to a part by weight of a crystalline phase based on 100 parts by weight of the silicon phases included in the negative electrode active material layer, and
B refers to a part by weight of an amorphous phase based on 100 parts by weight of the silicon phases included in the negative electrode active material layer.

In an exemplary embodiment of the present application, Formula 1 above may satisfy $5 \leq B/(A+B) \times 100(\%) \leq 30$, preferably $6 \leq B/(A+B) \times 100(\%) \leq 25$, and more preferably $7 \leq B/(A+B) \times 100(\%) \leq 25$.

Compared to a case in which a single-layer silicon-based active material layer is used in the related art, the negative electrode for a lithium secondary battery according to the present application can enable high-C-rate charging during the activation process to shorten the activation process itself, and at the same time, can adjust the ratio of the silicon phases in the negative electrode active material layer to the range of Formula 1 above. Accordingly, the manufacturing process time of the negative electrode for a lithium secondary battery can be shortened, and at the same time, the high-capacity feature and the life characteristics at room temperature can be secured.

In an exemplary embodiment of the present application, there is provided the negative electrode for a lithium secondary battery in which the second negative electrode active material layer includes silicon in an amorphous phase and silicon in a crystalline phase, and the amorphous phase is included in an amount of 90 parts by weight or more based on 100 parts by weight of the silicon phases included in the second negative electrode active material layer.

In another exemplary embodiment, the second negative electrode active material layer may include silicon in an amorphous phase and silicon in a crystalline phase, and the amorphous phase may satisfy a range of 90 parts by weight or more, and preferably 91 parts by weight or more, and specifically, 99 parts by weight or less, or 95 parts by weight or less based on 100 parts by weight of the silicon phases included in the second negative electrode active material layer.

In other words, the second negative electrode active material layer (upper layer) serves as a buffer layer and is coated to a minimum thickness to enable high-rate activation, and the high-capacity and high-density first negative electrode active material layer has a significant effect on the negative electrode performance.

In an exemplary embodiment of the present application, there is provided the negative electrode for a lithium secondary battery in which the first negative electrode active material layer includes silicon in an amorphous phase and silicon in a crystalline phase, and the crystalline phase is included in an amount of 50 parts by weight or more based on 100 parts by weight of the silicon phases included in the first negative electrode active material layer.

In another exemplary embodiment, the first negative electrode active material layer may include silicon in an amorphous phase and silicon in a crystalline phase, and the crystalline phase may satisfy a range of 60 parts by weight or more, and preferably 65 parts by weight or more, and specifically, 99 parts by weight or less, or 95 parts by weight or less based on 100 parts by weight of the silicon phases included in the first negative electrode active material layer.

In an exemplary embodiment of the present application, there is provided the negative electrode for a lithium secondary battery in which when a total thickness of the negative electrode active material layer is defined as T, the negative electrode active material layer includes a first region having a range of 0.2T or less based on a surface opposite to a surface facing the negative electrode current collector layer and a second region having a range of greater than 0.5T and 1T or less, in which the amorphous phase in the first region is included in an amount of 90 parts by weight or more based on 100 parts by weight of the silicon phases in the negative electrode active material layer, and in which the crystalline phase in the second region is included in an amount of 60 parts by weight or more based on 100 parts by weight of the silicon phases in the negative electrode active material layer.

In an exemplary embodiment of the present application, the total thickness T of the negative electrode active material layer may mean a summed thickness of a thickness of the first negative electrode active material layer and a thickness of the second negative electrode active material layer, and the regions as described above may be divided and expressed based on the total thickness. In this case, a surface serving as a reference for thickness measurement may be a surface of the second negative electrode active material layer opposite to a surface facing the first negative electrode active material layer.

In other words, the negative electrode active material layer according to the present application is formed as a double layer in which the first negative electrode active material layer and the second negative electrode active material layer are stacked, and enables high-rate charging during the activation process by having the second negative electrode active material layer, and accordingly, the ratio of the silicon phases in the negative electrode for a lithium secondary battery satisfies the above-described range.

In the present application, arrangement of the silicon phases can be confirmed through a change in silicon phase in a depth direction by Raman analysis for the negative electrode for a lithium secondary battery, and a weight distribution ratio within the negative electrode of the silicon phases can be confirmed through the analysis. In this case, the activation process proceeds on a surface part of the negative electrode active material layer. Considering that the surface part of the negative electrode active material layer (region far from the negative electrode current collector layer) includes the amorphous phase, and the inside of the negative electrode active material layer (region close to the negative electrode current collector layer) includes the crystalline phase, each region is divided and expressed in accordance with the thickness (T) based on the weight ratio of the silicon phases.

The region can be broadly divided into an amorphous phase region, a crystalline phase region, and a mixed region of the amorphous phase and the crystalline phase. The above-described first region may be expressed as an amorphous phase region, the second region may be expressed as a crystalline phase region, and a middle region of the above range (i.e., a region of greater than 0.2T and 0.5T or less) may be expressed as a mixed region of the amorphous phase and the crystalline phase.

By adjusting the distribution of the crystalline phase and the amorphous phase as described above, the features of high capacity and high energy density, and at the same time, excellent room temperature cycle life can be achieved.

In an exemplary embodiment of the present application, there is provided the negative electrode for a lithium secondary battery in which a viscosity of the first negative electrode active material layer composition is a shear viscosity of 2,000 cPs or higher and 15,000 cPs or less at a shear rate of 2.5 (1/s), and a viscosity of the second negative electrode active material layer composition is lower than the viscosity of the first negative electrode active material layer composition.

In another exemplary embodiment, the viscosity of the first negative electrode active material layer composition may satisfy a shear viscosity of 2,000 cPs or higher and 15,000 cPs or less, preferably 2,300 cPs or higher and 14,000 cPs or less, and more preferably 2,500 cPs or higher and 12,000 cPs or less at a shear rate of 2.5 (1/s).

In this case, the viscosity of the second negative electrode active material layer composition should be maintained lower than the viscosity of the first negative electrode active material layer composition so that a two-layered negative electrode active material layer can be formed as in the present application. More specifically, the viscosity of the second negative electrode active material layer composition should be lower than but similar to the viscosity of the first negative electrode active material layer composition.

In an exemplary embodiment of the present application, the negative electrode for a lithium secondary battery may be pre-lithiated.

The negative electrode for a lithium secondary battery according to the present application is composed of a double layer, and in particular, can enable high-rate charging during the activation process, which helps to adjust a ratio of the silicon phases in the negative electrode active material layer to thus ensure uniform lithiation in an electrode depth direction during future charging and discharging cycles.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

An exemplary embodiment of the present application provides a method for manufacturing a lithium secondary battery, the method including: preparing a lithium secondary battery including a positive electrode, a negative electrode for a lithium secondary battery, a separator, and an electrolyte; and activating the lithium secondary battery, wherein the activating includes a high-C-rate activation process (high-rate charging), wherein the preparing the negative electrode for a lithium secondary battery includes preparing a negative electrode current collector layer, forming a first negative electrode active material layer by applying a first negative electrode active material layer composition to one surface or both surfaces of the negative electrode current collector layer using a coater, and forming a second negative electrode active material layer by applying a second negative electrode active material layer composition to a surface of the first negative electrode active material layer opposite to a surface in contact with the negative electrode current collector layer using a coater, wherein the first negative electrode active material includes one or more selected from the group consisting of SiOx (x=0) and SiOx (0<x<2), and includes SiOx (x=0) in an amount of 95 parts by weight or more based on 100 parts by weight of the first negative electrode active material, and wherein the second negative electrode active material includes a mixture of one or more selected from the group consisting of a carbon-based active material, a silicon-based active material, a metal-based active material capable of alloying with lithium, and a lithium-containing nitride.

In the manufacturing method, the above-described descriptions may be applied to the composition and content included in each step.

That is, as described above, the second negative electrode active material layer is formed instead of the first negative electrode active material layer alone, which enables high-rate charging during the activation process to arrange the silicon phases of Formula 1 above, ensuring life characteristics.

In an exemplary embodiment of the present application, there is provided the negative electrode for a lithium secondary battery in which a thickness of the second negative electrode active material layer is 25% or greater and 45% or less of a total thickness of the first negative electrode active material layer and the second negative electrode active material layer.

In another exemplary embodiment, the thickness of the first negative electrode active material layer may be 10 $\mu$m or greater and 200 $\mu$m or less, specifically 15 $\mu$m or greater and 190 $\mu$m or less, and more specifically 20 $\mu$m or greater and 170 $\mu$m or less.

In another exemplary embodiment, the thickness of the second negative electrode active material layer may be 5 $\mu$m or greater and 150 $\mu$m or less, specifically 6 $\mu$m or greater and 145 $\mu$m or less, and more specifically 7 $\mu$m or greater and 140 $\mu$m or less.

An exemplary embodiment of the present application includes forming a first negative electrode active material layer by applying a first negative electrode active material layer composition on one surface or both surfaces of the negative electrode current collector layer through a coater.

That is, this step is a step of forming an active material layer on the negative electrode current collector layer, and may mean a step of forming an active material layer on a surface (lower layer part), which is in contact with the negative electrode current collector layer, of a double layer structure.

In an exemplary embodiment of the present application, the applying of the first negative electrode active material layer composition includes applying and drying a first negative electrode slurry including a first negative electrode active material layer composition and a negative electrode slurry solvent.

In this case, a solid content of the first negative electrode slurry may satisfy a range of 10% to 40%.

In an exemplary embodiment of the present application, the forming the first negative electrode active material layer may include mixing the first negative electrode slurry; and coating the mixed first negative electrode slurry on one surface or both surfaces of the negative electrode current collector layer through a coater, and the coating may be performed using a coating method that is commonly used in the art.

An exemplary embodiment of the present application includes forming a second negative electrode active material by applying a second negative electrode active material layer composition to a surface of the first negative electrode active material layer opposite to a surface in contact with the negative electrode current collector layer through a coater.

That is, this step is a step of forming a second negative electrode active material layer on the first negative electrode active material layer, and may mean a step of forming an active material layer on a surface (upper layer part), which is apart from the negative electrode current collector layer, of the double layer structure.

In an exemplary embodiment of the present application, the applying of the second negative electrode active material layer composition includes applying and drying a second negative electrode slurry including a second negative electrode active material layer composition and a negative electrode slurry solvent.

In this case, a solid content of the second negative electrode slurry may satisfy a range of 10% to 40%.

In an exemplary embodiment of the present application, there is provided the method for manufacturing a lithium secondary battery in which the forming the second negative electrode active material layer may include mixing the second negative electrode slurry, and coating the mixed second negative electrode slurry on a surface of the first negative electrode active material layer opposite to a surface in contact with the negative electrode current collector layer.

The coating may be performed using a coating method that is commonly used in the art.

The description of the forming the first negative electrode active material layer may be applied to the forming the second negative electrode active material layer.

In an exemplary embodiment of the present application, there is provided the method for manufacturing a lithium secondary battery in which the forming the second negative electrode active material layer on the first negative electrode active material layer may include a wet-on-dry process, or a wet-on-wet process.

In an exemplary embodiment of the present application, the wet-on-dry process may refer to a process of applying the first negative electrode active material layer composition, drying the composition partially or completely, and applying the second negative electrode active material layer composition on top of the composition.

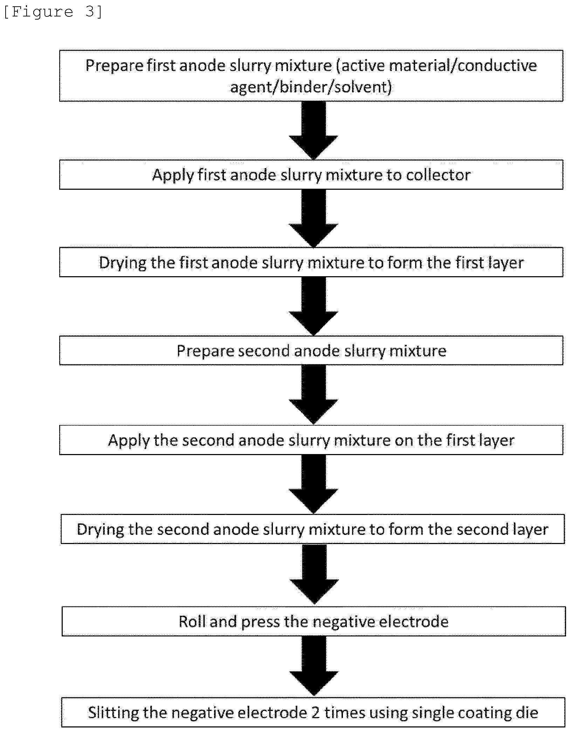

FIG. 3 is a flowchart showing a wet-on-dry process according to an exemplary embodiment of the present application. Specifically, in the wet-on-dry process, a first negative electrode slurry mixture (first negative electrode active material, first negative electrode conductive material, first negative electrode binder, first solvent) is prepared and applied to the negative electrode current collector layer. Thereafter, the first negative electrode slurry mixture is dried to form a first negative electrode active material layer. Thereafter, a second negative electrode slurry mixture is prepared, applied to the first negative electrode active material layer, and dried to form a second negative electrode active material layer. Thereafter, each layer may be rolled and pressed to form a negative electrode for a lithium secondary battery according to the present application.

In an exemplary embodiment of the present application, the wet-on-wet process refers to a process of applying the first negative electrode active material layer composition and applying the second negative electrode active material layer composition on top of the first negative electrode active material layer composition without drying the same.

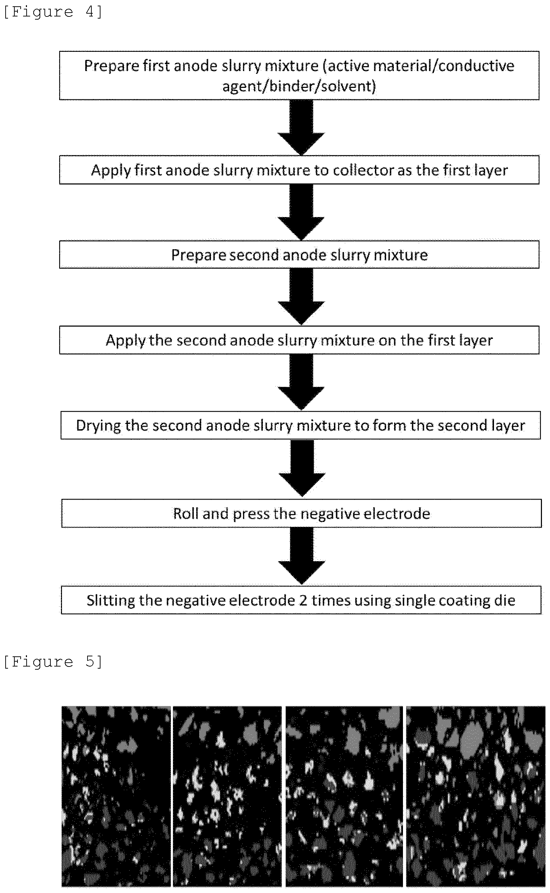

FIG. 4 is a flowchart showing a wet-on-wet process according to an exemplary embodiment of the present application. Specifically, in the wet-on-wet process, a first negative electrode slurry mixture is prepared and applied to a negative electrode current collector layer, and at the same time, a second negative electrode slurry mixture is prepared and applied to the first negative electrode slurry mixture, and then, the first and second negative electrode slurry mixtures are dried. Thereafter, each layer may be rolled and pressed to form a negative electrode for a lithium secondary battery according to the present application.

In particular, the wet-on-dry process is to apply the first negative electrode active material layer composition, to completely dry the composition, and then to apply the second negative electrode active material layer composition thereon, making it possible for the first negative electrode active material layer and the second negative electrode active material layer to have a clear boundary through the processes as described above. Accordingly, the compositions included in the first negative electrode active material layer and the second negative electrode active material layer are not mixed, making it possible to configure a double layer.

In an exemplary embodiment of the present application, the negative electrode slurry solvent may be used without limitation as long as it can dissolve the first negative electrode active material layer composition and the second negative electrode active material layer composition, and specifically, water or NMP may be used.

As a result of the wet-on-wet process described above, a bonding region in which the first negative electrode active material layer and the second negative electrode active material layer are mixed may be formed.

In this case, in order for the wet-on-wet process to occur, the viscosity of the first negative electrode active material layer composition should be lower than the viscosity of the second negative electrode active material layer composition such that inter-mixing occurs in the bonding region and the process. The viscosity range should be satisfied to ensure a stable double layer coating during the wet-on-wet process.

In the present application, after the first negative electrode active material layer is dried (wet-on-dry process), the second negative electrode active material layer is formed, so that an interface between the two layers is clearly divided. In addition, when the second negative electrode active material layer is applied in a state in which the first negative electrode active material layer composition is not completely dried (the first negative electrode active material layer composition and the second negative electrode active material layer composition are applied simultaneously), mixing occurs at an interface of the two layers, forming a bonding region. In this case, it is undesirable if a mixed region is generated in the wet-on-dry process, and in order to ensure the wet-on-dry processability, the viscosity of the second negative electrode active material layer composition should be lower than the viscosity of the first negative electrode active material layer, as described above, so that the coating processability enables the coating to be done well up to the coating edge portion.

In an exemplary embodiment of the present application, there is provided the method for manufacturing a lithium secondary battery, the method including pre-lithiating a negative electrode in which the first negative electrode active material layer and the second negative electrode active material layer are formed on the negative electrode current collector layer, wherein the pre-lithiating the negative electrode includes a lithium electroplating process, a lithium metal transfer process, a lithium metal deposition process, or a stabilized lithium metal powder (SLMP) coating process.

As described above, the second negative electrode active material layer contains the above-described second negative electrode active material and has a mixed composition of a silicon-based active material and a carbon-based active material, so that the advantage of rapid charging can be taken as it is. Especially, the second negative electrode active material has a mixed composition, and thus, is highly irreversible, which is advantageous even in the pre-lithiation process of precharging the negative electrode. As compared with a case in which only a first negative electrode active material layer is simply applied, the second negative electrode active material layer has the second negative electrode active material having the above composition, enabling a uniform pre-lithiation process on top of the negative electrode and thus improving the life.

In an exemplary embodiment of the present application, porosities of the first and second negative electrode active material layers may satisfy a range of 10% or greater and 60% or less.

In another exemplary embodiment, the porosities of the first and second negative electrode active material layers may satisfy a range of 10% or greater and 60% or less, preferably 20% or greater and 50% or less, and more preferably 30% or greater and 45% or less.

The porosity varies depending on the compositions and contents of the active materials, conductive materials and binders included in the first and second negative electrode active material layers, and accordingly, the electrode has the electrical conductivity and resistance within appropriate ranges.

In an exemplary embodiment of the present application, the positive electrode may include a positive electrode current collector layer and a positive electrode active material layer formed on the positive electrode current collector layer and including a positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0\leq c1\leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01\leq c2\leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01\leq c3\leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Preparation of Negative Electrode>**

### Preparation of First Negative Electrode Active Material Layer

Si (average particle diameter (D50): 5 μm) serving as a silicon-based active material, a first conductive material, a second conductive material, and polyacrylamide serving as a binder were added to distilled water serving as a solvent for formation of a negative electrode slurry at a weight ratio of 70:10:10:10 to prepare a first negative electrode slurry (solid concentration: 25 wt%).

The first conductive material was carbon black C (specific surface area: 58 $m^2$/g, diameter: 37 nm), the second conductive material was plate-like graphite (specific surface area: 17 $m^2$/g, average particle diameter (D50): 3.5 μm).

As a mixing method, after dispersing the first conductive material, the second conductive material, the binder and water at 2500 rpm for 30 minutes with a homo mixer, the active material was added to the dispersion, which was then dispersed at 2500 rpm for 30 minutes to fabricate a slurry.

The first negative electrode slurry was coated on both surfaces of a copper current collector (thickness: 8 μm) serving as a negative electrode current collector, which was then roll-pressed and dried in a vacuum oven at 130°C for 10 hours to form a first negative electrode active material layer.

### Preparation of Second Negative Electrode Active Material Layer

SiO (average particle diameter (D50): 3.5 μm) serving as a silicon-based active material, artificial graphite serving as a carbon-based active material, a first conductive material, a second conductive material, and polyacrylamide serving as a binder were added to distilled water serving as a solvent for formation of a negative electrode slurry at a weight ratio of 50:30:5:5:10 to prepare a second negative electrode slurry (solid concentration: 25 wt%).

The first conductive material was carbon black C (specific surface area: 58 $m^2$/g, diameter: 37 nm), the second conductive material was plate-like graphite (specific surface area: 17 m$^2$/g, average particle diameter (D50): 3.5 $\mu$m).

As a mixing method, after dispersing the first conductive material, the second conductive material, the binder and water at 2500 rpm for 30 minutes with a homo mixer, the active material was added to the dispersion, which was then dispersed at 2500 rpm for 30 minutes to fabricate a slurry.

The second negative electrode slurry was coated on the first negative electrode active material layer, which was then roll-pressed and dried in a vacuum oven at 130°C for 10 hours to form a second negative electrode active material layer.

**<Preparation of Secondary Battery>**

A positive electrode slurry (solid concentration: 78 wt%) was prepared by adding LiNi$_{0.6}$Co$_{0.2}$Mn$_{0.2}$O$_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 $\mu$m) serving as a positive electrode current collector with a loading amount of 537 mg/25 cm$^2$, which was then roll-pressed and dried in a vacuum oven at 130°C for 10 hours to form a positive electrode active material layer (thickness: 65 $\mu$m), whereby a positive electrode was prepared (thickness of positive electrode: 77 $\mu$m, porosity: 26%).

A lithium secondary battery was manufactured by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DMC) were mixed at a volume ratio of 30:70, in an amount of 3 wt% based on a total weight of the electrolyte and adding LiPF$_6$ as a lithium salt to a concentration of 1M.

Then, the activation process was performed under the conditions shown in Table 1 below, and the results are shown in Table 2 below.

[Table 1]

| | Charging | | | | Discharging | |
|---|---|---|---|---|---|---|
| | CC | | CC-CV | | CC | |
| | Current (C) | Voltage (V) | Current (C) | Voltage (V) | Current (C) | Voltage (V) |
| Example 1 | 1 C | 4.2 V | 1 C | 4.2 V | 1 C | 2.5 V |
| Example 2 | 3 C | 4.2 V | 3 C | 4.2 V | 1 C | 2.5 V |
| Example 3 | 2 C | 4.2 V | 2 C | 4.2 V | 1 C | 2.5 V |
| Example 4 | 1.5 C | 4.2 V | 1.5 C | 4.2 V | 1 C | 2.5 V |
| Comparative Example 1 | 0.65 C | 4.2 V | 0.65 C | 4.2 V | 1 C | 2.5 V |
| Comparative Example 2 | 0.55 C | 4.2 V | 0.55 C | 4.2 V | 1 C | 2.5 V |
| Comparative Example 3 | 0.8 C | 4.2 V | 0.8 C | 4.2 V | 1 C | 2.5 V |
| Comparative Example 4 | 0.45 C | 4.2 V | 0.45 C | 4.2 V | 1 C | 2.5 V |

[Table 2]

| | Ratio of crystalline phase in negative electrode active material layer | Mixed ratio of crystalline phase and amorphous phase in negative electrode active material layer | Ratio of amorphous phase in negative electrode active material layer | Formula 1 |
|---|---|---|---|---|
| Example 1 | 0.609 | 0.248 | 0.143 | 16 |
| Example 2 | 0.450 | 0.476 | 0.074 | 9 |
| Example 3 | 0.545 | 0.365 | 0.091 | 12 |
| Example 4 | 0.622 | 0.233 | 0.145 | 15 |
| Comparative Example 1 | 0.533 | 0.264 | 0.203 | 33 |

(continued)

|  | Ratio of crystalline phase in negative electrode active material layer | Mixed ratio of crystalline phase and amorphous phase in negative electrode active material layer | Ratio of amorphous phase in negative electrode active material layer | Formula 1 |
|---|---|---|---|---|
| Comparative Example 2 | 0.491 | 0.298 | 0.211 | 34 |
| Comparative Example 3 | 0.485 | 0.333 | 0.183 | 31 |
| Comparative Example 4 | 0.449 | 0.311 | 0.240 | 38 |

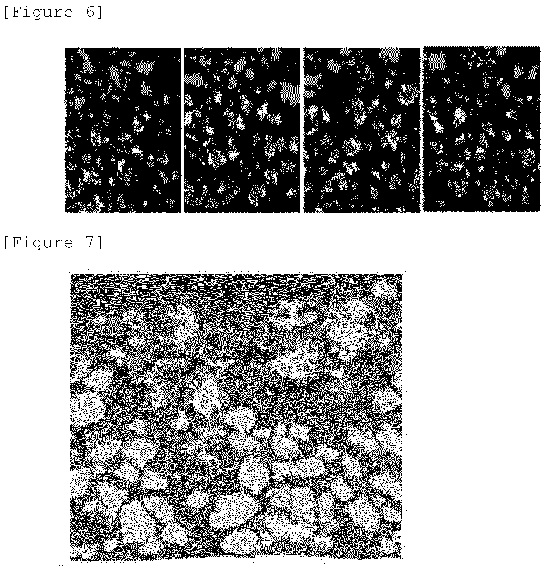

FIG. 5 is a view showing distributions of silicon phases through Raman analysis for negative electrodes for a lithium secondary battery according to Examples 1 to 4 of the present application, and FIG. 6 is a view showing distributions of silicon phases through Raman analysis for negative electrodes for a lithium secondary battery according to Comparative Examples 1 to 4 of the present application.

Specifically, for the Examples and Comparative Examples described above, changes in silicon phase in the depth direction of the electrode were confirmed through Raman analysis for the first negative electrode active material layer for the cross-section electrode. Specifically, red (top) indicates an amorphous phase, blue (bottom) indicates a crystalline phase, and green (middle) may indicate mixing of amorphous and crystalline phases. In the case of the second negative electrode active material layer, the ratio of the amorphous phase based on the total silicon phases in the second negative electrode active material layer was 95 parts by weight or more. However, the thickness of the second negative electrode active material layer was formed thinner than the thickness of the first negative electrode active material layer. Therefore, when considering the entire negative electrode for a lithium secondary battery, there was no significant difference except that there was a certain amount of increase in amorphous phase (an increase by 5 to 7 parts by weight based on the total) in Raman analysis for the first negative electrode active material layer.

### <Comparative Example 5>

Si (average particle diameter (D50): 5 $\mu$m) serving as a silicon-based active material, a first conductive material, a second conductive material, and polyacrylamide serving as a binder were added to distilled water serving as a solvent for formation of a negative electrode slurry at a weight ratio of 70:10:10:10 to prepare a negative electrode slurry (solid concentration: 25 wt%).

The first conductive material was carbon black C (specific surface area: 58 m$^2$/g, diameter: 37 nm), the second conductive material was plate-like graphite (specific surface area: 17 m$^2$/g, average particle diameter (D50): 3.5 $\mu$m).

As a mixing method, after dispersing the first conductive material, the second conductive material, the binder and water at 2500 rpm for 30 minutes with a homo mixer, the active material was added to the dispersion, which was then dispersed at 2500 rpm for 30 minutes to fabricate a slurry.

The negative electrode slurry was coated on both surfaces of a copper current collector (thickness: 8 $\mu$m) serving as a negative electrode current collector, which was then roll-pressed and dried in a vacuum oven at 130°C for 10 hours to form a negative electrode active material layer. Then, a positive electrode was prepared as in Example 1 described above, and a lithium secondary battery was prepared in the same manner.

Then, the activation process was performed under the same conditions as in Example 1.

FIG. 7 is a SEM photograph of a cross section of a negative electrode for a lithium secondary battery according to Comparative Example 5 of the present application. Specifically, the battery was subjected to the charging process at a high rate of 1C as in Example 1, and it could be confirmed that the reaction was concentrated on the surface part of the electrode made of pure Si and surface degradation occurred, and that the surface degradation reaction was easily observed only with the SEM photograph even before the Raman analysis.

### Experimental Example 1: Evaluation of Life Characteristics

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate. In Table 3 below, the in-situ capacity retention rate, not the RPT capacity retention rate, is shown.

capacity retention rate (%)={ (discharge capacity in the Nth cycle)/(discharge capacity in the first cycle)}$\times$100

**Experimental Example 2: Evaluation of Resistance Increase Rate Measurement**

In the test in Experimental Example 1, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.

In addition, for the evaluation of the life characteristics and the evaluation of the resistance increase rate measurement, data at 200 cycle was each calculated, and the results are shown in Table 3 below.

[Table 3]

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Capacity retention rate @200 cycle | 89.82 | 89.5 | 89.7 | 89.72 | 89.75 | 89.8 | 89.7 | 89.85 | 82.3 |
| Resistance increase rate @200 cycle | 1.16 | 1.18 | 1.172 | 1.17 | 1.165 | 1.177 | 1.168 | 1.14 | 2.8 |
| Activation time | 2hr | 1hr 20min | 1hr 30min | 1hr 40min | 2hr 32min | 2hr 49min | 3hr 15min | 3hr 13min | 2h |

As can be seen in Table 3 above, it could be seen that when the lithium secondary battery according to the present application was subjected to the activation process under the activation conditions in Table 1 above, including the second negative electrode active material layer, a lithium secondary battery satisfying the optimal silicon phases could be manufactured.

Specifically, in the case of Examples 1 to 4 according to the present application, high-rate charging of 1C or higher was performed, and as can be seen in Table 2, including the second negative electrode active material layer, it could be seen that the ratio of the amorphous and crystalline phases of silicon satisfies the specific Formula 1. In other words, it could be confirmed that even when the activation process is performed under high-rate (1C or higher) activation conditions, the capacity retention rate and the resistance increase rate satisfy certain ranges during battery driving, and at the same time, the activation time is minimized, making it suitable for the mass production process.

That is, the negative electrodes of Examples 1 to 4 according to the present application can ensure the processability of mass production by including a second negative electrode active material layer and a high-rate (1C or higher) activation process, and define the ratio of the amorphous and crystalline phases of silicon in which the capacity characteristics are satisfied like the related art and the resistance increase rates are low even though the high-rate (1C or higher) activation process is included.

Comparative Examples 1 to 4 correspond to cases where measurements were made on the same negative electrodes as in the Examples while changing the activation conditions as shown in Table 3 above. In other words, it could be confirmed that in the activation process, the capacity characteristics and resistance increase rates were excellent when charging was performed for a long time under low charging conditions (low rate), but when the activation process time exceeded 2 hours as in Comparative Examples 1 to 4, a problem occurred in mass production, which was not suitable for the process.

In addition, the higher the SiO content contained in the second negative electrode active material layer, the better the retention. Additionally, the SiO content in the second negative electrode active material layer composition can be adjusted to such extent that performance can be improved compared to a negative electrode containing Si as a single active material layer, and may be equal to or less than or more than the content of Example 1.

For reference, Comparative Example 5 corresponds to a case in which a negative electrode having only the first negative electrode active material layer according to the present application, that is, a single active material layer structure is prepared. In this case, it can be seen that the second negative electrode active material layer is not included, so when a high-rate activation process like Example 1 is performed, the processability can be secured as in Example 1, but as shown in Table 3, the capacity retention rate is lower than Examples 1 to 4 of the present application and the resistance increase rate is also higher than the Examples. That is, it could be confirmed that during the activation, the reaction was concentrated on the surface of the negative electrode including only pure Si, resulting in rapid deterioration in the life characteristics due to surface degradation. That is, in such a case, it is necessary to perform a low-rate activation process or another type of activation process by adjusting the activation process conditions.

That is, as can be seen in Table 3, the batteries of Examples 1 to 4 according to the present application have the feature of defining the states of the silicon phases of a negative electrode for a lithium secondary battery, in which the capacity retention rates and resistance characteristics equal to or higher than those of Comparative Examples 1 to 4 in which the process time was increased by applying a low-rate activation process can be exhibited and the processability can be ensured.

**Claims**

1. A negative electrode for a lithium secondary battery comprising:

    a negative electrode current collector layer; and
    a negative electrode active material layer formed on one surface or both surfaces of the negative electrode current collector layer,
    wherein the negative electrode active material layer comprises a first negative electrode active material layer provided on the negative electrode current collector layer and a second negative electrode active material layer provided on a surface of the first negative electrode active material layer opposite to a surface facing the negative electrode current collector layer,
    wherein the first negative electrode active material layer comprises a first negative electrode active material layer composition comprising a first negative electrode active material, and the second negative electrode active material layer comprises a second negative electrode active material layer composition comprising a second negative electrode active material,
    wherein the first negative electrode active material comprises one or more selected from the group consisting of SiOx (x=0) and SiOx (0<x<2), and comprises SiOx (x=0) in an amount of 95 parts by weight or more based on 100 parts by weight of the first negative electrode active material,

wherein the second negative electrode active material comprises a mixture of one or more selected from the group consisting of a carbon-based active material, a silicon-based active material, a metal-based active material capable of alloying with lithium, and a lithium-containing nitride,

wherein a ratio of silicon in an amorphous phase included in the first negative electrode active material layer is lower than a ratio of silicon in an amorphous phase included in the second negative electrode active material layer, and

wherein a ratio of silicon phases included in the negative electrode active material layer satisfies following Formula 1:

$$[Formula\ 1]$$

$$5 \leq B/(A+B)\ x\ 100(\%) \leq 30$$

in Formula 1 above,

A refers to a part by weight of a crystalline phase based on 100 parts by weight of the silicon phases included in the negative electrode active material layer, and

B refers to a part by weight of an amorphous phase based on 100 parts by weight of the silicon phases included in the negative electrode active material layer.

2.  The negative electrode for a lithium secondary battery of claim 1, wherein the second negative electrode active material layer comprises silicon in an amorphous phase and silicon in a crystalline phase, and
    wherein the amorphous phase is included in an amount of 90 parts by weight or more based on 100 parts by weight of the silicon phases included in the second negative electrode active material layer.

3.  The negative electrode for a lithium secondary battery of claim 1, wherein the first negative electrode active material layer comprises silicon in an amorphous phase and silicon in a crystalline phase, and
    wherein the crystalline phase is included in an amount of 50 parts by weight or more based on 100 parts by weight of the silicon phases included in the first negative electrode active material layer.

4.  The negative electrode for a lithium secondary battery of claim 1, wherein when a total thickness of the negative electrode active material layer is defined as T, the negative electrode active material layer comprises a first region having a range of 0.2T or less based on a surface opposite to a surface facing the negative electrode current collector layer and a second region having a range of greater than 0.5T and T or less,

    wherein the amorphous phase in the first region is included in an amount of 90 parts by weight or more based on 100 parts by weight of the silicon phases in the negative electrode active material layer, and
    wherein the crystalline phase in the second region is included in an amount of 60 parts by weight or more based on 100 parts by weight of the silicon phases in the negative electrode active material layer.

5.  The negative electrode for a lithium secondary battery of claim 1, wherein the second negative electrode active material comprises a mixture of one or more selected from the group consisting of a carbon-based active material, a silicon-based active material, a metal-based active material capable of alloying with lithium, and a lithium-containing nitride, and the silicon-based active material is included in an amount of 65 parts by weight or more and 100 parts by weight or less on the basis of 100 parts by weight of the second negative electrode active material.

6.  The negative electrode for a lithium secondary battery of claim 1, wherein the silicon-based active material comprises one or more selected from the group consisting of SiOx (0<x<2), SiC, and a Si alloy.

7.  The negative electrode for a lithium secondary battery of claim 1, wherein the silicon-based active material comprises SiOx (0<x<2).

8.  The negative electrode for a lithium secondary battery of claim 1, wherein the first negative electrode active material is included in an amount of 60 parts by weight or more on the basis of 100 parts by weight of the first negative electrode active material layer composition.

9.  The negative electrode for a lithium secondary battery of claim 1, wherein a viscosity of the first negative electrode active material layer composition is a shear viscosity of 2,000 cPs or higher and 15,000 cPs or less at a shear rate of 2.5 (1/s), and

wherein a viscosity of the second negative electrode active material layer composition is lower than the viscosity of the first negative electrode active material layer composition.

10. The negative electrode for a lithium secondary battery of claim 1, wherein the first negative electrode active material layer is formed on an entire surface of the negative electrode current collector layer, and

wherein the second negative electrode active material layer is formed on an entire surface of the first negative electrode active material layer.

11. A lithium secondary battery comprising:

a positive electrode;

the negative electrode for a lithium secondary battery of any one of claims 1 to 10;

a separator provided between the positive electrode and the negative electrode; and

an electrolyte.

12. A method for manufacturing a lithium secondary battery, the method comprising:

preparing a lithium secondary battery comprising a positive electrode, a negative electrode for a lithium secondary battery, a separator, and an electrolyte; and

activating the lithium secondary battery,

wherein the activating comprises a high-C-rate activation process (high-rate charging),

wherein the preparing the negative electrode for a lithium secondary battery comprises:

preparing a negative electrode current collector layer, forming a first negative electrode active material layer by applying a first negative electrode active material layer composition to one surface or both surfaces of the negative electrode current collector layer using a coater, and

forming a second negative electrode active material layer by applying a second negative electrode active material layer composition to a surface of the first negative electrode active material layer opposite to a surface in contact with the negative electrode current collector layer using a coater,

wherein the first negative electrode active material comprises one or more selected from the group consisting of SiOx (x=0) and SiOx (0<x<2), and comprises SiOx (x=0) in an amount of 95 parts by weight or more on the basis of 100 parts by weight of the first negative electrode active material, and

wherein the second negative electrode active material comprises a mixture of one or more selected from the group consisting of a carbon-based active material, a silicon-based active material, a metal-based active material capable of alloying with lithium, and a lithium-containing nitride.

13. The method of claim 12, comprising pre-lithiating a negative electrode having the first negative electrode active material layer and second negative electrode active material layer formed on the negative electrode current collector,

wherein the pre-lithiating the negative electrode comprises a lithium electroplating process, a lithium metal transfer process, a lithium metal deposition process, or a stabilized lithium metal powder (SLMP) coating process.

14. The method of claim 12, wherein the forming the second negative electrode active material layer on the first negative electrode active material layer comprises a wet-on-dry process, and

wherein the wet-on-dry process comprises:

applying the first negative electrode active material layer composition;

forming the first negative electrode active material layer by drying partially or completely the applied first negative electrode active material layer composition; and

applying the second negative electrode active material layer composition to the first negative electrode active material layer.

15. The method of claim 11, wherein the forming the second negative electrode active material layer on the first negative electrode active material layer comprises a wet-on-wet process, and

wherein the wet-on-wet process comprises:

applying the first negative electrode active material layer composition; and

applying the second negative electrode active material layer composition to the first negative electrode active material layer composition in an undried state of the first negative electrode active material layer composition.

[Figure 1]

[Figure 2]

[Figure 3]

```
┌─────────────────────────────────────────────────────────────────┐
│   Prepare first anode slurry mixture (active material/conductive  │
│                    agent/binder/solvent)                          │
└─────────────────────────────────────────────────────────────────┘
                                ▼
┌─────────────────────────────────────────────────────────────────┐
│            Apply first anode slurry mixture to collector          │
└─────────────────────────────────────────────────────────────────┘
                                ▼
┌─────────────────────────────────────────────────────────────────┐
│      Drying the first anode slurry mixture to form the first layer│
└─────────────────────────────────────────────────────────────────┘
                                ▼
┌─────────────────────────────────────────────────────────────────┐
│                Prepare second anode slurry mixture                │
└─────────────────────────────────────────────────────────────────┘
                                ▼
┌─────────────────────────────────────────────────────────────────┐
│        Apply the second anode slurry mixture on the first layer   │
└─────────────────────────────────────────────────────────────────┘
                                ▼
┌─────────────────────────────────────────────────────────────────┐
│   Drying the second anode slurry mixture to form the second layer │
└─────────────────────────────────────────────────────────────────┘
                                ▼
┌─────────────────────────────────────────────────────────────────┐
│              Roll and press the negative electrode                │
└─────────────────────────────────────────────────────────────────┘
                                ▼
┌─────────────────────────────────────────────────────────────────┐
│  Slitting the negative electrode 2 times using single coating die │
└─────────────────────────────────────────────────────────────────┘
```

[Figure 4]

```
┌─────────────────────────────────────────────────────────┐
│  Prepare first anode slurry mixture (active material/     │
│        conductive agent/binder/solvent)                   │
└─────────────────────────────────────────────────────────┘
                          │
                          ▼
┌─────────────────────────────────────────────────────────┐
│  Apply first anode slurry mixture to collector as the     │
│                    first layer                            │
└─────────────────────────────────────────────────────────┘
                          │
                          ▼
┌─────────────────────────────────────────────────────────┐
│         Prepare second anode slurry mixture               │
└─────────────────────────────────────────────────────────┘
                          │
                          ▼
┌─────────────────────────────────────────────────────────┐
│      Apply the second anode slurry mixture on the         │
│                    first layer                            │
└─────────────────────────────────────────────────────────┘
                          │
                          ▼
┌─────────────────────────────────────────────────────────┐
│  Drying the second anode slurry mixture to form the       │
│                   second layer                            │
└─────────────────────────────────────────────────────────┘
                          │
                          ▼
┌─────────────────────────────────────────────────────────┐
│          Roll and press the negative electrode            │
└─────────────────────────────────────────────────────────┘
                          │
                          ▼
┌─────────────────────────────────────────────────────────┐
│  Slitting the negative electrode 2 times using single     │
│                    coating die                            │
└─────────────────────────────────────────────────────────┘
```

[Figure 5]

[Figure 6]

[Figure 7]

## INTERNATIONAL SEARCH REPORT

| International application No. |
| --- |
| **PCT/KR2023/021551** |

| **A.** | **CLASSIFICATION OF SUBJECT MATTER** |
| --- | --- |

**H01M 4/134**(2010.01)i; **H01M 4/38**(2006.01)i; **H01M 4/48**(2010.01)i; **H01M 10/0525**(2010.01)i; **H01M 4/04**(2006.01)i; **H01M 4/02**(2006.01)i

According to International Patent Classification (IPC) or to both national classification and IPC

| **B.** | **FIELDS SEARCHED** |
| --- | --- |

Minimum documentation searched (classification system followed by classification symbols)

H01M 4/134(2010.01); H01M 10/052(2010.01); H01M 10/42(2006.01); H01M 4/13(2010.01); H01M 4/36(2006.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 음극 활물질(anode active material), 실리콘(silicon), 결정(crystalline), 비정질(amorphous), 활성화(formation), 전리튬화(pre-lithiation)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 2016-181331 A (TOSHIBA CORP.) 13 October 2016 (2016-10-13)<br>See claims 1 and 3; and paragraphs [0022], [0079] and [0080]. | 12-15 |
| A | | 1-11 |
| Y | KR 10-2020-0018147 A (LG CHEM, LTD.) 19 February 2020 (2020-02-19)<br>See claims 1 and 10; and paragraphs [0074] and [0108]. | 12-15 |
| A | JP 2016-219354 A (TOYOTA INDUSTRIES CORP.) 22 December 2016 (2016-12-22)<br>See claim 1; and paragraphs [0056] and [0089]. | 1-15 |
| A | KR 10-2014-0074739 A (SAMSUNG SDI CO., LTD.) 18 June 2014 (2014-06-18)<br>See entire document. | 1-15 |
| A | JP 2015-133326 A (SEMICONDUCTOR ENERGY LAB CO., LTD.) 23 July 2015 (2015-07-23)<br>See entire document. | 1-15 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2024** | **15 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/021551**

| Patent document cited in search report | | | Publication date (day/month/year) | Patent family member(s) | | | Publication date (day/month/year) |
|---|---|---|---|---|---|---|---|
| JP | 2016-181331 | A | 13 October 2016 | US | 2016-0285081 | A1 | 29 September 2016 |
| KR | 10-2020-0018147 | A | 19 February 2020 | | None | | |
| JP | 2016-219354 | A | 22 December 2016 | | None | | |
| KR | 10-2014-0074739 | A | 18 June 2014 | CN | 103872297 | A | 18 June 2014 |
| | | | | CN | 103872297 | B | 03 October 2017 |
| | | | | EP | 2741350 | A1 | 11 June 2014 |
| | | | | EP | 2741350 | B1 | 28 October 2015 |
| | | | | JP | 2014-116306 | A | 26 June 2014 |
| | | | | JP | 6315765 | B2 | 25 April 2018 |
| | | | | KR | 10-1698763 | B1 | 23 January 2017 |
| | | | | US | 2014-0162129 | A1 | 12 June 2014 |
| | | | | US | 9123952 | B2 | 01 September 2015 |
| JP | 2015-133326 | A | 23 July 2015 | JP | 2011-198756 | A | 06 October 2011 |
| | | | | JP | 5711565 | B2 | 07 May 2015 |
| | | | | JP | 6113770 | B2 | 12 April 2017 |
| | | | | US | 10141120 | B2 | 27 November 2018 |
| | | | | US | 2011-0212363 | A1 | 01 September 2011 |

Form PCT/ISA/210 (patent family annex) (July 2022)

**REFERENCES CITED IN THE DESCRIPTION**

**Patent documents cited in the description**

- KR 1020220184204

- JP 2009080971 A